# EUROPEAN PATENT SPECIFICATION

(11) **EP 1 153 943 B1**
(45) Date of publication and mention of the grant of the patent: **24.11.2004**
(21) Application number: 00500089.8
(22) Date of filing: 10.05.2000
(51) Int. Cl.: C08F 10/00, C08F 4/24, C08F 4/69, C08F 4/646

(54) **Process for producing bimodal polyethylene**
Verfahren zur Herstellung von bimodalem Polyethylen
Procédé de préparation de polyéthylène bimodal

(43) Date of publication of application: 14.11.2001
(73) Proprietor: REPSOL QUIMICA S.A., E-28046 Madrid (ES)
(72) Inventor: Hernandez-Vaquero Alvarez, José Luis, 28015 Madrid (ES); Del Amo Fernandez, Bernardo, 28029 Madrid (ES); Fernandez Sibon, Francisco José, 28034 Madrid (ES); Rodriguez Sinoga, Jesus, 13500 Puertollano (Ciudad Real) (ES); Madueno Casado, Manuel, 13500 Puertollano (Ciudad Real) (ES)
(74) Representative: Del Santo Abril, Natividad

(56) References cited:
- EP-A- 0 179 666
- EP-A- 0 314 385
- EP-A- 0 480 376
- WO-A-96/21684
- US-A- 5 408 015

## Description

### Background of the Invention

The present invention relates to the field of manufacturing polyolefin resins and particularly to the catalysis of ethylene polymerisation and co-polymerisation. The invention provides a solid phase catalyst composition, comprising Ziegler catalyst and chromium catalyst components, both being supported on silica. By using a support of a similar nature, the two catalyst components have a more uniform consistency and improved flowability. Thus the dosing characteristics of the catalyst system according to the invention are more predictable and subject to more accurate control than the conventional catalytic systems that incorporate a magnesium dichloride based Ziegler catalyst.

The invention also relates to methods of preparing the combined catalyst, and to its use in olefin polymerisation reactions.

### Description of the Prior Art

Polyethylene requires for certain applications a bimodal distribution of molecular weight in order to yield optimal structural characteristics and physical properties. This may be achieved, for example, by using a multi-step process or by simultaneously using at least two catalysts which produce polymer of different molecular weight under the process conditions.

In general, multi-step processes are quite complex and expensive. Thus, the most advantageous route is to combine in a single step two distinct catalysts which produce polymers of different molecular weight.

Phillips catalysts are chromium-based with their inert support being silica of a defined pore size, and the molecular weight of the polymers generated being governed by the reaction temperature (*e.g*. U.S. Patents 4,053,436, 4,150,208, 4,392,990, 4,405,501). In contrast, Ziegler catalysts are normally supported on crystalline magnesium dihalide and the molecular weight is regulated by the level of hydrogen. They contain at least one transition metal compound (*e*.*g*. usually titanium) and a co-catalyst containing an organometallic compound.

The use of a chromium catalyst in conjunction with a Ziegler catalyst for obtaining the bimodal distribution of polymer lengths in an olefin polymerisation reaction is known. U.S. Patents 4,285,834, 4,263,422 and EP 0 480 376 teach such combinations of independently supported catalysts, in which the titanium is supported by an inorganic dihalide, such as magnesium chloride. The titanium catalyst may also be supported on magnesium oxide, as taught, for example, by U.S. Patents 5,330,950 5,408,015. The crystal structures of these supports activate the titanium as catalyst. Consequently, where a Ziegler catalyst is to be supported on silica, magnesium is generally added during production (*e*.*g*. U.S. Patent 3,787,384).

Ziegler titanium catalysts may also be treated with organic materials to modify their activity, including hexene which prevents poisoning of a chromium catalyst used in conjunction with an organometallic catalytic system (U.S. Patent 5,408,015).

However, while combinations of chromium and titanium catalysts have been found to be particularly useful for providing the desired bimodal distribution of molecular weight, the combination of a Phillips and a Ziegler catalyst has suffered until now from several disadvantages:
- the reaction conditions are particularly difficult to control with adequate accuracy;
- the final polymer contains a significant amount of fines, which contaminate the reaction product and damage plant equipment;
- it is difficult to maintain the final polymer within the necessary specifications of density, melt index (MI) and molecular weight distribution (MWD), causing a significant amount of product to be of limited value;
- the differences in flowability and morphology between both catalytic systems prevent accurate operation of catalyst dosing valves.

### Summary of the Invention

It is a object of the present invention to provide a catalyst for the polymerization of ethylene which produces polyethylene with broad or bimodal molecular weight distribution, good morphology and reproducible MI, density and MWD.

The present invention creates a smoothly-flowing catalyst by distributing both catalytic components on a similar support, *i*.*e*. silica. The flowability of silica, when compared to magnesium dichloride, leads to major improvements in the polymerization process. In fact, processes operated in accordance with the prior art cause the titanium catalyst to undergo significant fluctuations, even though the silica supported chromium catalyst may be dosed in a constant and reliable manner. This fluctuation in the dosing of titanium catalyst is typically observed with magnesium-supported Ziegler-type catalysts. When operating with a single catalytic species this characteristic does not result in major drawbacks, since the fluctuation does not provoke major changes in polymer properties, but only reduces stability of polymerization conditions (*e*.*g*. temperature, ethylene pressure, H₂/C₂ ratio). However, the dosing problem is greatly aggravated when operating with a mixture of two catalysts, as in the case of the present invention. In this case, high or lower dosing of either of the two catalysts alters the ratio between them, generating changes in polymer properties. Thus, using a combination of two catalysts and operating according to the prior art results in a considerable proportion of product lying outside the acceptable specification range.

Premixing the two catalysts prior to their addition to the reactor provides no solution, for their different consistencies and flow properties prevent the formation of a homogeneous mixture.

The present invention solves this problem associated with the prior art by the provision of a catalytic system wherein both components are independently supported on silica. This permits accurate dosing of the catalytic components into polymerisation reactors without producing undesirable fines. Predictable, accurate control of the reaction conditions in association with an end-product of higher quality is the result.

Components of the catalyst system may be introduced into the olefin polymerisation reaction through individual dosing, or they may be pre-mixed for joint addition in pre-determined combinations known to favour particular resin formulations.

Methods are provided for use of the bimodal solid-phase catalyst system in olefin polymerisation reactions.

### Detailed Description of the Invention

The present invention provides a process for the polymerization of ethylene wherein ethylene and optionally an α-olefin are polymerized in the presence of a catalyst comprising a chromium-containing catalyst supported onto silica, a titanium-containing catalyst supported onto silica and a cocatalyst for the activation of the titanium catalyst.

The type of chromium-containing catalyst is not crucial for the achievements of the technical effects of the invention. In fact, commercial chromium catalysts typically possess the flowability that is an essential requisite for the invention. Thus, the choice of the proper chromium-based catalyst depends on the specific product requirements.

In general, those catalysts which show a high rate of incorporation of comonomer and a low sensitivity to alkylaluminums are preferred.

In fact, the chromium catalyst produces the high molecular weight polymer and, in the case of ethylene copolymers, it is well known that the best results are obtained when the comonomer is prevalently incorporated in the high molecular weight fraction. Furthermore, since the polymerization takes place in the presence of a trialkylaluminum, needed for the activation of the Ziegler catalyst, the catalyst is preferably not sensitive to the presence of these compounds.

The concentration of chromium in the catalyst is also not crucial. Typically catalysts containing from 0.1 to 5% by weight of chromium are used.

Suitable commercial chromium catalysts are the following: 969ID, 969MS, 968MS and 967BWF1, sold by W.R. Grace.

The titanium-containing catalyst can be any such type of catalyst which uses silica as a support. Examples of commercially available Ziegler catalysts useful in the present invention are: Sylopol 5950, sold by W.R.Grace and ZC-8 from PQ Corporation

The cocatalyst is selected amongst compounds known in the art to be active in the activation of Ziegler catalysts. A typical example is represented by alkylaluminum. The most preferred compounds are triethylaluminum (TEA) and triisobutylaluminum.

The chromium and titanium catalysts are used in a weight ratio from 95:5 to 5:95, more preferably from 80:20 to 20:80.

With the catalyst of the present application it is possible to copolymerize ethylene with at least a linear or branched C₃-C₂₀ ∀-olefin. Preferably the comonomer is selected from: propene, 1-butene, 1-pentene, 1-hexene, 1-methyl-4-pentene, 1-octene, 1-decene.

The process according to the present invention is particularly suitable for the preparation of polyethylene presenting bimodal or broad molecular weight distribution. Most preferably the polyethylene according to the present invention has MWD measured by GPC (gel permeation chromatography) as M_{w}/Mₙ comprised between 15 and 30, an amount of fines measured with a 80 mesh sieve lower than 10 % and a chromium content ranging from 1 to 10 ppm and a magnesium content ranging from 1 to 15 ppm.

The catalyst according to the invention is particularly suitable for slurry polymerization conditions. Typically, it is used in a temperature range from 40 to 110°C, preferably from 70 to 105°C, more preferably from 80 to 100°C.

A preferred type of reactor suitable in the production of polyethylene according to the present invention is a loop reactor. Residence time in the reactor varies considerably according to the process conditions used. In general it will vary from 20 minutes to 3 hours, preferably from 30 minutes to 2 hours. The pressure used is from 5-50 bars, preferably from 20 to 40 bars. As a diluent it can be used a inert aliphatic hydrocarbon; preferably isobutane or hexane is used.

In order to illustrate the nature of the invention more fully, and the manner in which it is to be practised, the following examples are presented.

### EXAMPLES

### COMPARATIVE EXAMPLE 1

Comparative catalyst system 1: polymerisation of ethylene was performed in a continuous loop reactor in which the reaction mixture and polymer are circulated within a pipe loop. The reactor was contacted externally with a suitable cooling medium to maintain the desired polymerisation temperature. A single, commercially available, fluorinated silica-supported chromium catalyst was used (967BWF1, supplied by W.R. Grace). The polymerization was continued for 6 hours; every 15 minutes temperature and dosing period were recorded and samples were taken for measuring polymer parameters. The stability of the reaction parameters during the operation are indicated in Table 1. The obtained polyethylene had Mw = 367,000 and Mn=21,500; MWD=17.1

### COMPARATIVE EXAMPLE 2

Comparative catalyst system 2: in this comparative example, the procedure of Example 1 was repeated in the same reactor, but two commercially available catalysts were used: the fluorinated silica-supported chromium catalyst 967BWF1, and a Ziegler catalyst supported on magnesium dichloride (Lynx 100, supplied by Engelhard). Both catalysts were fed to the polymerisation reactor simultaneously in order to obtain a broad molecular weight distribution of polyethylene. The polymerization was run for 6 hours following the procedure of comparative example 1.

Using the two catalysts in combination results in pronounced instability of reaction conditions, as indicated in Table I by the elevated standard deviation of the temperature measurements. Fluctuating dosage periods recorded for the non-silica-supported Ziegler catalyst are controlled responses to the temperature fluctuations recorded, which themselves probably arise from uneven flow of this catalyst through the dosage valve. As a consequence of the unstable reaction conditions, large variations are observed in the high-load melt index ("HLMI") and in the density of the polymer product. Moreover, the resin contained a high proportion of fines, which lowers the quality and value of the resin and generates serious problems in subsequent manufacturing operations. The obtained polymer had Mw=328,000 and Mn=13,100; MWD=25. The chromium content was 2.9 ppm and the magnesium content was 4.9 ppm.

### EXAMPLE 3

Catalyst system 3: the procedure of Example 1 was repeated in the same reactor, but using a silica-supported Ziegler catalyst (Sylopol 5950, supplied by W.R: Grace ) in combination with the commercial chromium catalyst 967BWF1, that employs a fluorinated silica support and which was used in catalyst system 1. The polymerization was run for 6 hours following the procedure of comparative example 1.

Table I illustrates that in contrast to the variable results observed with catalyst system 2, basing the Ziegler catalyst on a silica support has a stabilising effect on the reaction parameters. Both the temperature and the dosing period for the Ziegler catalyst (Doser #2) show a substantial improvement in stability, as do the product parameters HLMI and resin density. A significant decrease in the quantity of fines detected in the final resin was also recorded. The obtained polyethylene had M_{w} =291,200 and Mₙ =12,800; MWD = 22.8; the chromium content was 3 ppm and the magnesium content was 8.3 ppm.

### EXAMPLE 4

Catalyst system 4: the procedure of Example **3** was repeated in the same reactor, but using a combination of the silica-supported Ziegler catalyst Sylopol 5950 and a non-fluorinated chromium catalyst, supported on silica, and comprising titanium in its composition (Sylopore 965, supplied by W.R: Grace). The polymerization was run for 12 hours following the procedure of comparative example 1. The obtained polyethylene had Mw=275,800 and Mn=14,600; MWD=18.9. The chromium content was 3.2 ppm and the magnesium content was 5.6 ppm. The results are shown in Table I: comparison with those of the previous Examples shows a similar stability of the polymerisation reaction parameters as that observed with catalyst system 3.

Unlike catalytic system 2, in which the chromium catalyst was combined with a Ziegler catalyst supported on magnesium, both catalytic systems 3 and 4 employed a silica-supported Ziegler catalyst in combination with the chromium catalyst. Table I shows that both catalytic systems 3 and 4 provided dramatic improvements over the combined catalytic process known in the art. Thus, it is evident that the use of silica supported Ziegler catalysts is compatible with diverse chromium catalysts.

The standard deviations of the HLMI results for catalytic systems 2, 3 and 4, which are shown in Table I, clearly demonstrate that when used in combination with a chromium catalyst supported on silica, silica-supported Ziegler catalysts caused a dramatic improvement in the predictability and stability of the resin properties (Examples 3 & 4; catalytic systems 3 & 4), in comparison to the result obtained when the Ziegler catalyst was supported on magnesium (comparative Example 2; catalyst system 2). Furthermore the resin according to the invention contains a much lower amount of fines.

**TABLE I**

| **Catalytic System** | Comparative 1 **Cr** (F) | Comparative 2 **Cr** (F) **Ti** (Mg) | 3 **Cr** (F) **Ti** (Si) | 4 **Cr** (Ti) **Ti** (Si) |
|---|---|---|---|---|
| **Reaction Parameters** | | | | |
| Reactor Temp. (°C) | 95,0 | 89,5 | 90,0 | 87,5 |
| Standard Deviation | 0,05 | 1,34 | 0,10 | 0,16 |
| 99% Confidence | ± 0,04 | ± 0,32 | ± 0,07 | ± 0,12 |
| Doser #1 (Cr) (s/cycle) | 70 | 93 | 95 | 90 |
| Standard Deviation | 0 | 0,00 | 0,00 | 0,00 |
| 99% Confidence | ± 0,00 | ± 0,00 | ± 0,00 | ± 0,00 |
| Doser #2 (Ti) (s/cycle) | --- | 75 | 60 | 85 |
| Standard Deviation | --- | 26,4 | 0,0 | 0,0 |
| 99% Confidence | --- | ± 4,32 | ± 0,00 | ± 0,00 |
| H₂ flash (mol %) | 0 | 0.38 | 1.17 | 0.84 |
| Hexene flash (wt %) | 0.80 | 1.10 | 0.54 | 1.30 |
| TEA (ppm) | 10 | 20 | 20 | 20 |
| Catalyst ratio | - | 3.6 | 1.1 | 1.9 |

| **Product Parameters** | | | | |
|---|---|---|---|---|
| HLMI | 0,32 | 22,0 | 17,0 | 7,6 |
| Standard Deviation | 0,03 | 4,80 | 0,46 | 0,40 |
| 99% Confidence | ± 0,02 | ± 3,36 | ± 0,34 | ± 0,30 |
| Density (g/cc) | 0,940 | 0,950 | 0,952 | 0,945 |
| Standard Deviation | 0,00 | 0,20 | 0,00 | 0,00 |
| 99% Confidence | ± 0,000 | ± 0,004 | ± 0,000 | ± 0,000 |
| Chromium (ppm) | 2,5 | 2,9 | 3 | 3,2 |
| Magnesium (ppm) | - | 4,9 | 8,3 | 5,6 |
| Fines < 80 mesh (%) | 1,21 | 24,80 | 5,25 | 7,30 |
| (Si): silica support; (Mg): magnesium support; (F): fluorine-treated support; (Ti): titanium-containing support. | | | | |

## Claims

1. Process for the polymerisation of ethylene wherein ethylene and an α-olefin are polymerised in the presence of a catalyst system comprising a chromium-containing catalyst supported on silica, a titanium-containing catalyst supported on silica and a cocatalyst for the activation of the titanium-containing catalyst.

2. Process according to claim 1 wherein the chromium containing catalyst and the titanium containing catalyst are introduced into the olefin polymerisation reactor through individual dosing.

3. Process according to claim 1 wherein the chromium containing catalyst and the titanium containing catalyst are pre-mixed for joint addition into the olefin polymerisation reactor.

4. Process according to claims 1-3 wherein the concentration of chromium in the chromium containing catalyst is from 0.1 to 5% by weight.

5. Process according to claims 1-4 wherein the comonomer is selected from: propene, 1-butene, 1-pentene, 1-hexene, 1-methyl-4-pentene, 1-octene and 1-decene.

6. Process according to claims 1-5 wherein the cocatalyst is selected from triethylaluminum and isobutylaluminum.

7. Process according to claims 1-6 wherein the chromium-containing catalyst and the titanium-containing catalyst are used in a weight ratio from 95:5 to 5:95.

## Patentansprüche

1. Verfahren zur Polymerisation von Ethylen, wobei Ethylen und ein α-Olefin in Gegenwart eines Katalysatorsystems, das aus einem chromhaltigen Katalysator auf Siliziumträger, einem titanhaltigen Katalysator auf Siliziumträger und einem Cokatalysator zur Aktivierung des titanhaltigen Katalysators besteht, polymerisiert werden.

2. Verfahren nach Anspruch 1, wobei der chromhaltige Katalysator und der titanhaltige Katalysator in einzelner Dosierung in den Olefinpolymerisationsreaktor eingeführt werden.

3. Verfahren nach Anspruch 1, wobei der chromhaltige Katalysator und der titanhaltige Katalysator zur gemeinsamen Zugabe in den Olefinpolymerisationsreaktor vorgemischt werden.

4. Verfahren nach den Ansprüchen 1-3, wobei die Konzentration an Chrom im chromhaltigen Katalysator 0,1 bis 5 Gew.% beträgt.

5. Verfahren nach den Ansprüchen 1-4, wobei das Comonomer ausgewählt wird aus: Propen, 1-Buten, 1-Penten, 1-Hexen, 1-Methyl-4-penten, 1-Octen y 1-Decen.

6. Verfahren nach den Ansprüchen 1-5, wobei der Cokatalysator aus Triethylaluminium und Isobutylaluminium ausgewählt wird.

7. Verfahren nach den Ansprüchen 1-6, wobei der chromhaltige Katalysator und der titanhaltige Katalysator mit einem Gewichtsverhältnis von 95:5 bis 5:95 eingesetzt werden.

## Revendications

1. Procédé pour la polymérisation de l'éthylène, pour lequel l'éthylène et une α-oléfine sont polymérisés en présence d'un système catalyseur qui comprend un catalyseur contenant du chrome supporté sur silice, un catalyseur contenant du titanium supporté sur silice et un co-catalyseur pour l'activation du catalyseur contenant du titanium.

2. Procédé selon la revendication 1, pour lequel le catalyseur contenant du chrome et le catalyseur contenant du titanium sont introduits dans le réacteur de polymérisation de l'oléfine au moyen d'un dosage individuel.

3. Procédé selon la revendication 1, pour lequel le catalyseur contenant du chrome et le catalyseur contenant du titanium sont préalablement mélangés pour être ajoutés ensemble dans le réacteur de polymérisation de l'oléfine.

4. Procédé selon les revendications 1-3, pour lequel la concentration en chrome dans le catalyseur contenant du chrome est de 0,1 à 5% en poids.

5. Procédé selon les revendications 1-4, pour lequel le co-monomère est sélectionné parmi: propène, 1-butène, 1-pentène, 1-hexène, 1-méthyl-4-pentène, 1-octène et 1-décène.

6. Procédé selon les revendications 1-5, pour lequel le co-catalyseur est sélectionné parmi le triéthylaluminium et l'isobutylaluminium.

7. Procédé selon les revendications 1-6, pour lequel le catalyseur contenant du chrome et le catalyseur contenant du titanium sont utilisés dans un rapport de poids de 95:5 à 5:95.
